# EUROPÄISCHE PATENTANMELDUNG

(11) **EP 3 886 279 A1**
(43) Veröffentlichungstag der Anmeldung: **29.09.2021**
(21) Anmeldenummer: 21159862.8
(22) Anmeldetag: 01.03.2021
(51) Int. Cl.: H02G 3/12

(54) **SET ZUR BEFESTIGUNG AN EINEM BAUTEIL**

(30) Priorität: 25.03.2020 DE 102020108209
(71) Anmelder: Daniel, Hendrik, 52080 Aachen (DE)
(72) Erfinder: Daniel, Hendrik, 52080 Aachen (DE)
(74) Vertreter: Bauer, Dirk

(57) **Zusammenfassung**

Die Erfindung betrifft ein Set (1) zur Befestigung an einem Bauteil eines Gebäudes, umfassend eine zylinderförmige Einbaudose (2) mit mindestens einem Befestigungsmittel (13) zur mechanischen Verbindung der Einbaudose (2) mit dem Bauteil und eine zylinderförmige Verbindungseinrichtung (3), wobei die Einbaudose (2) eine Aufnahme (6) zur Aufnahme der Verbindungseinrichtung (3) aufweist und die Verbindungseinrichtung (3) ausgehend von einem Ruhezustand (5) in die Aufnahme (6) einführbar und mittels mindestens eines Verbindungsmittels (26) befestigbar ist, so dass ein Einbauzustand der Verbindungseinrichtung (3) vorliegt. Um ein Set der eingangs genannten Art so weiter zu entwickeln, dass dessen Einbau in ein Bauteil eines Gebäudes besonders einfach erfolgen kann, ist erfindungsgemäß vorgesehen, dass ein Außendurchmesser der Verbindungseinrichtung (3) mindestens in einem Bereich, der im Einbauzustand der Verbindungseinrichtung (3) mit dem Bereich des mindestens einen Befestigungsmittels (13) der Einbaudose (2) zumindest teilweise korrespondiert, größer ist als ein Innendurchmesser der Einbaudose (2) im Bereich des mindestens einen Befestigungsmittels (13) im Ruhezustand (4) der Einbaudose (2).

## Beschreibung

### Einleitung

Die Erfindung betrifft ein Set zur Befestigung an einem Bauteil eines Gebäudes, umfassend
- eine zylinderförmige Einbaudose mit mindestens einem Befestigungsmittel zur mechanischen Verbindung der Einbaudose mit dem Bauteil und
- eine zylinderförmige Verbindungseinrichtung,
wobei die Einbaudose eine Aufnahme (Aussparung) zur Aufnahme der Verbindungseinrichtung aufweist und die Verbindungseinrichtung ausgehend von einem Ausbauzustand, in dem die Verbindungseinrichtung als Einzelteil uneingebaut vorliegt, in die Aufnahme einführbar und mittels mindestens eines Verbindungsmittels befestigbar ist, so dass ein Einbauzustand der Verbindungseinrichtung in der Einbaudose vorliegt.

Als Bauteile eines Gebäudes werden gemäß der vorliegenden Anmeldung sämtliche Wände und Decken verstanden, sowie auch andere Einbauten, in denen Installationen, also elektrische und/oder elektronische Geräte, wie beispielsweise Steckdosen, Lichtschalter, Rollladenschalter, Bewegungsmelder, Überwachungskameras, Sprechanlagen, Rauchmelder, Einbauleuchten, Telefon-Dosen, WLAN-Repeater, USB-Ports und weitere, vorgesehen werden. Ferner werden als Gebäude im Sinne der Anmeldung sämtliche Bauten verstanden, in denen Installationen vorgesehen sind. Hierzu zählen beispielsweise Außenanlagen sowie temporäre Bauten, wie Messestände, Baucontainer oder andere Bauten.

Die Einbaudose ist gemäß der vorliegenden Anmeldung ein Element zur Anordnung in oder an einem Bauteil eines Gebäudes, das zur Unterbringung einer Installation dient. Die Einbaudose ist somit vergleichbar mit einer im Stand der Technik bekannten Hohlraumdose, Hohlwanddose, Deckendose, Unterputzdose oder Steckerdose.

### Stand der Technik

In einem Gebäude werden zahlreiche der vorgenannten Installationen benötigt und installiert. Diese Installationen müssen in der Ausbauphase eines Gebäudes vorgesehen werden, wobei die Bauteile typischerweise geschlitzt werden, um die Installationen und die eventuell benötigten Elektroleitungen und/oder Versorgungsleitungen entsprechend in den Bauteilen des Gebäudes verlegen zu können, da die Versorgungsleitungen im ausgebauten Zustand des Gebäudes unsichtbar sein sollen. Auch die Installationen an sich sollen nur an der Oberfläche der Gebäudeteile sichtbar und zugänglich sein. Bei Innenwänden aus Trockenbau besteht die Möglichkeit, die Versorgungsleitungen im Innenraum zwischen den äußeren Trockenbauplatten zu verlegen und die Öffnungen für die Installationen mittels Kernbohrungen zu schaffen.

Um eine herkömmliche Einbaudose in einer Trockenbauplatte beziehungsweise einer Konstruktion aus mehreren geschichteten Trockenbauplatten zu verankern, weisen die bekannten Einbaudosen typischerweise mehrere Schrauben auf, an dessen Ende eine Verankerungseinheit angeordnet ist. Nach dem Einsetzen der Einbaudose erfolgt unter Verdrehung der Schrauben eine Verschiebung der Verankerungselemente, welche sich auf der nicht sichtbaren Seite der Trockenblauplatte befinden, typischerweise nach außen, wodurch die bekannte Einbaudose in ihrer Position fixiert wird.

Zur Fixierung einer herkömmlichen Einbaudose in einer massiven Wand, beispielsweise einer Betonwand, werden in aller Regel zunächst Kernlochbohrungen vorgenommen, wobei ein Durchmesser einer entsprechenden Öffnungen einen Durchmesser der Hohlraumdose oder Unterputzdose übersteigt, um eine Zugabe von Gips in die Öffnung zu ermöglichen. Anschließend wird die Dose mittels des Gipses in der Bohrung befestigt.

Unabhängig von der Art der Wand werden die gewünschten Schalter oder andere Installationen in die Einbaudose eingebaut. Bei einem Lichtschalter wird zunächst ein Unterputzeinsatz in die Unterputzdose eingesetzt und an letztgenannter befestigt, wobei die benötigten Elektroleitungen durch eine rückseitige Öffnung der Unterputzdose geführt und an den Unterputzeinsatz angeschlossen werden. Daraufhin werden die Wippe zur Bedienung und schließlich ein Abdeckrahmen eingesetzt.

Der Einbau der einzelnen Installationen ist zeitaufwändig und kann an manchen Stellen eines Gebäudes, wie beispielsweise an einer Decke, umständlich und unangenehm sein, da ein Arbeiten über Kopf notwendig ist.

Weiterhin kommt es häufiger vor, dass die herkömmlichen Unterputzdosen nach mehrmaliger Benutzung der Installation, insbesondere einer Steckdose, ungewollt aus dem Bauteil herausfallen und dann wieder neu eingesetzt werden müssen. Dies ist insbesondere bei einem nicht ordnungsgemäßen Entfernen eines Steckers aus einer Steckdose, beispielsweise infolge einer ruckartigen Bewegung, der Fall. Hierbei wird die Steckdose mitsamt der Unterputzdose aus der Öffnung herausgerissen.

Auch wenn der Austausch einer bestehenden Installation gewünscht ist, muss diese zunächst umständlich abgeklemmt werden, bevor der Anschluss einer neuen Installation erfolgen kann. In all diesen Fällen ist es erforderlich einen geschulten Fachmann, typischerweise einen Elektriker, hinzuzuziehen. Es versteht sich, dass ein solches Vorgehen aufgrund des erhöhten Zeitaufwands mit hohen Kosten verbunden ist.

Aus der DE 20 2017 103 605 U1 geht eine Beleuchtungseinrichtung hervor, die sich dadurch auszeichnen soll, dass sie auf einfache und schnelle Weise in einer handelsüblichen Unterputzdose untergebracht werden kann. Hierzu umfasst die bekannte Beleuchtungseinrichtung eine zweiteilige Koppelanordnung, von der ein erstes Koppelteil in die Unterputzdose eingesetzt und elektrisch bzw. datentechnisch und mechanisch verbunden wird. Ein zweites Koppelteil ist an einem Beleuchtungsmodul angebracht, wobei die beiden Koppelteile über eine Magnetverbindung miteinander verbunden werden. Gleichzeitig soll die Magnetverbindung auch die elektrische Verbindung herstellen. Hierdurch soll der Einbau und ein Austausch des Beleuchtungsmoduls vereinfacht werden.

Zwar wird bei der bekannten Beleuchtungseinrichtung der Einbau der eigentlichen Installation, also des Beleuchtungsmoduls, erleichtert, jedoch erfolgt der Einbau der Unterputzdose in dem Bauteil sowie der Einbau der Koppelanordnung in der Unterputzdose auf klassische Weise. Nachteiliger Weise kann das vorstehend genannte Problem hinsichtlich eines versehentlichen Ausreißens der gesamten Beleuchtungseinrichtung auftreten.

### Aufgabe

Es ist Aufgabe der vorliegenden Erfindung, ein Set der eingangs genannten Art so weiter zu entwickeln, dass dessen Einbau in ein Bauteil eines Gebäudes besonders einfach erfolgen kann.

### Lösung

Ausgehend von dem eingangs genannten Set wird die vorstehende Aufgabe dadurch gelöst, ein Außendurchmesser der Verbindungseinrichtung mindestens in einem Bereich, der im Einbauzustand der Verbindungseinrichtung mit dem Bereich des mindestens einen Befestigungsmittels der Einbaudose zumindest teilweise korrespondiert, größer ist als ein Innendurchmesser der Einbaudose im Bereich des mindestens einen Befestigungsmittels im Ruhezustand der Einbaudose.

Als "Bereich des mindestens einen Befestigungsmittels" in Bezug auf den Außendurchmesser der Verbindungseinrichtung wird dabei ein Bereich der Verbindungeinrichtung verstanden, der in einem Einbauzustand der Verbindungseinrichtung, also in einem Zustand, in dem die Verbindungseinrichtung in der Einbaudose eingeführt und mit dieser verbunden ist, zumindest an einem Abschnitt des Befestigungsmittels anliegt.

Dabei erfolgt die Befestigung der Einbaudose an dem Bauteil durch Einführung der Verbindungseinrichtung in die Aufnahme und durch Überführung der Verbindungseinrichtung von ihrem Ruhezustand in ihren Einbauzustand, da hierdurch das Befestigungsmittel der Einbaudose aktiviert wird. Durch das Überführen der Verbindungseinrichtung in ihren Einbauzustand, in dem der Außendurchmesser der Verbindungseinrichtung an einen im Vergleich kleineren Innendurchmesser der Einbaudose stößt, wird das mindestens eine Befestigungsmittel der Einbaudose radial nach außen gedrückt, so dass in diesem Bereich der Einbaudose eine Querschnittsaufweiterung beziehungsweise ein Aufspreizen erfolgt und demzufolge eine Verkantung mit dem Bauteil vorliegt. Folglich tritt ein Bereich des Befestigungsmittels nach außen über einen Außendurchmesser der Einbaudose in dem Ruhezustand der Einbaudose hervor, so dass sich die Einbaudose in einem Befestigungszustand befindet. Diese Querschnittsaufweitung dient als Verkantung mit dem Bauteil des Gebäudes und erreicht eine Befestigung der Einbaudose in dem Bauteil, die nach Aktivierung des Befestigungsmittels nicht mehr aus der Öffnung des Bauteils entnehmbar ist. Im Vergleich zu den bekannten Einbaudosen erfolgt mithin eine stabilere Befestigung des Sets an dem Bauteil des Gebäudes. Das mindestens eine Befestigungsmittel wirkt hierbei vorzugsweise nach Art eines Widerhakens und erschwert ein versehentliches Herausziehen der Einbaudose aus einer Öffnung in dem Bauteil.

Kurz gesagt dient die Verbindungseinrichtung zur Befestigung der Einbaudose in dem Bauteil, wobei der Innendurchmesser - und somit auch der Außendurchmesser - der Einbaudose mithin infolge einer Krafteinwirkung zumindest im Bereich des Befestigungsmittels veränderbar ist.

Der Außendurchmesser der Verbindungseinrichtung sollte in ihrem Ruhezustand in dem Bereich, der im Einbauzustand mit dem Bereich des mindestens einen Befestigungselementes der Einbaudose korrespondiert, 0,5 mm bis 6 mm, vorzugsweise 1,5 mm bis 5 mm, größer sein als der Innendurchmesser der Einbaudose im Bereich des mindestens einen Befestigungselementes im Ruhezustand der Einbaudose.

Vorteilhafterweise besitzt die Einbaudose über ihren Umfang verteilt mehrere Befestigungselemente, beispielsweise vier Befestigungselemente, die äquidistant zueinander angeordnet sind. Selbstverständlich ist auch eine andere Anzahl an Befestigungselementen denkbar, wie beispielsweise drei, sechs oder acht. Dementsprechend ist dann vorgesehen, dass der Außendurchmesser der Verbindungseinrichtung in dem Einbauzustand derselben dann an den den Befestigungselementen entsprechenden Bereichen größer ist als der Innendurchmesser der Einbaudose in diesen Bereichen.

Die Verbindungseinrichtung kann so aufgebaut sein, dass sie einen batteriebetriebenen Rauchmelder aufnehmen kann, der dann optisch ansprechend innerhalb des Bauteils angeordnet ist und nicht - wie sonst üblich - auf einer fertigen Bauteiloberfläche aufliegt. Im vorgenannten Fall müssen die Verbindungseinrichtung und/oder der Rauchmelder über geeignete Mittel verfügen, um eine stabile Befestigung des Rauchmelders in der Verbindungseinrichtung zu bieten. Selbstverständlich können auch andere autark funktionierende Installationen in oder an der Verbindungseinrichtung befestigt werden, beispielsweise kleinere Bewegungsmelder oder kleinere LED Leuchten.

Sowohl die Einbaudose als auch die Verbindungseinrichtung sind zylinderförmig aufgebaut, woraus sich ergibt, dass die Aufnahme in der Einbaudose, in die die Verbindungseinrichtung eingeführt wird, ebenfalls zylinderförmig ausgebildet sein muss. Vorzugsweise ist die Aufnahme zentrisch in der Einbaudose angeordnet, so dass die Verbindungseinrichtung in ihrem Einbauzustand koaxial in der Einbaudose positioniert ist. Demzufolge kann die Einbaudose auch rohrförmig aufgebaut sein. Der zylinderförmige Aufbau der Einbaudose und der Verbindungseinrichtung soll gemäß der vorliegenden Anmeldung nicht bedeuten, dass die Einbaudose und die Verbindungseinrichtung keine Unebenheiten oder Vor- bzw. Rücksprünge an deren Außen- und/oder Innendurchmessern aufweisen können.

Die unterschiedlichen Durchmesser der Einbaudose und der Verbindungseinrichtung im Bereich des mindestens einen Befestigungsmittels können auf verschiedene Art und Weise erreicht werden: Eine Möglichkeit besteht darin, dass der Innendurchmesser der Einbaudose in etwa dem Außendurchmesser der Verbindungseinrichtung entspricht, wobei das Befestigungsmittel in einen von der Aufnahme gebildeten Innenraum der Einbaudose hineinragt, sodass der Innendurchmesser im Bereich der Befestigungsmittel gegenüber dem übrigen Innendurchmesser verkleinert ist. Folge ist, dass die Verbindungseinrichtung im Zuge ihres Einbaus an das Befestigungsmittel gelangt und dieses radial nach außen drängt.

Zur Befestigung der Einbaudose ist es somit erforderlich, dass die Verbindungseinrichtung in der Einbaudose verbleibt. Vorteilhafterweise ist es jedoch auch möglich, die Verbindungseinrichtung und somit auch die Einbaudose wieder auszubauen, da mit der Entnahme der Verbindungseinrichtung das mindestens eine Befestigungsmittel wieder deaktiviert wird und der Querschnitt der Einbaudose wieder dem ihres Ruhezustandes entspricht.

Vorzugsweise kann das mindestens eine Befestigungsmittel von einem Federelement gebildet sein, die im Ruhezustand der Einbaudose über einen Innendurchmesser der Einbaudose in einen von der Aufnahme gebildeten Innenraum der Einbaudose hineinragt, wobei der dem Bereich des Federelementes zumindest teilweise korrespondierende Bereich der Verbindungseinrichtung in ihrem Einbauzustand mit einer dem Innenraum der Einbaudose zugewandten Fläche des mindestens einen Federelementes in Kontakt steht. Das mindestens eine Federelement zeichnet sich dadurch aus, dass sie bis auf einen verhältnismäßig kurzen Abschnitt über ihren Umfang frei liegt und dort nicht mit der eigentlichen Einbaudose in Verbindung steht. Hierdurch wird eine Beweglichkeit des Federelementes erzielt. Beispielsweise kann das Federelement rechteckig aufgebaut sein und zwei lange und zwei kurze Seiten besitzen. In diesem Fall wäre es sinnvoll, dass das Federelement an einer kurzen Seite, vorzugsweise integral, mit der Einbaudose verbunden ist und die übrigen drei Seiten frei liegen. Selbstverständlich ist es im Sinne einer festen Verankerung der Einbaudose im Bauteil von Vorteil, wenn mindestens zwei gegenüberliegende oder drei äquidistante Federelemente über den Umfang der Verbindungseinrichtung verteilt sind.

Gemäß einer weiteren vorteilhaften Ausgestaltung der Erfindung ist vorgesehen, dass sich das mindestens eine Verbindungsmittel zur Verbindung der Verbindungseinrichtung mit der Einbaudose aus einer in der Einbaudose angeordneten, dem Innenraum der Aufnahme zugewandten Nut und mindestens einem an einer äußeren Mantelfläche der Verbindungseinrichtung angeordneten Führungselement zusammensetzt, wobei das mindestens eine Führungselement in die Nut einführbar ist. Dabei ist die Nut vorteilhafterweise langgestreckt und verläuft in etwa in Umfangsrichtung einer inneren Oberfläche der Einbaudose.

Dabei stellt die Nut sicher, dass die Verbindungseinrichtung fest in der Einbaudose verankerbar ist. Vorzugsweise ist dabei vorgesehen, dass das mindestens eine Führungselement als eine über den Außendurchmesser der Verbindungseinrichtung hervorstehende Nase ausgebildet ist, die in dem Einbauzustand der Verbindungseinrichtung mit der Nut zusammenwirkt. Insgesamt wirkt die Verbindung der Verbindungseinrichtung mit der Einbaudose nach Art eines Bajonettversch l usses.

Zwecks komfortabler Einführung des Führungselementes in die Nut kann die Nut weiter vorzugsweise einen in Richtung einer Längsachse der Einbaudose verlaufenden Abschnitt aufweisen, in den das Führungselement zunächst eingeführt wird, bevor eine Drehung der Verbindungseinrichtung in Umfangsrichtung erfolgt. Als Längsachse der Einbaudose wird die Rotationssymmetrieachse der zylinderförmigen Einbaudose verstanden.

Alternativ kann das Verbindungsmittel jedoch auch nach Art einer Schnappverbindung oder Schraubverbindung ausgebildet sein. Derartige Verbindungsmittel eignen sich ebenfalls für eine besonders feste und sichere Verbindung und sind deshalb besonders dazu geeignet, die Verbindungseinrichtung in der Einbaudose zu halten.

Gemäß einem weiteren Merkmal der Erfindung ist vorgesehen, dass die Nut in Richtung einer Längsachse der Einbaudose betrachtet spiralförmig verläuft. Auf diese Weise erfolgt bei Einführung des mindestens einen Führungselementes der Verbindungseinrichtung in die Nut und bei Bewegung desselben in der Nut eine Drehbewegung der Verbindungseinrichtung und gleichzeitig eine axiale Bewegung in Richtung der Einbaudose.

Ferner ist es gemäß einer Weiterbildung der Erfindung vorgesehen, dass Nutflanken nicht geradlinig sondern treppenförmig verlaufen, um sicherzustellen dass die Verbindungseinrichtung nicht ungewollt wieder aus der Einbaudose heraus gelangt. Hierbei ist ferner vorteilhaft, wenn das Führungselement einen entsprechenden Vorsprung aufweist, der entsprechend an den Treppenstufen einrastet.

Eine vorteilhafte Ausgestaltung der Erfindung sieht eine Mehrzahl an der äußeren Mantelfläche der Verbindungseinrichtung verteilt angeordneter Führungselemente vor, die jeweils in entsprechende Nutabschnitte einführbar sind. Die Verbindungseinrichtung ist somit besonders gleichmäßig in der Einbaudose verankerbar und es wird einer eventuellen Verkantung der Verbindungseinrichtung in der Einbaudose entgegengewirkt.

Eine besonders vorzugsweise Weiterentwicklung des erfindungsgemäßen Sets sieht vor, dass die Verbindungseinrichtung in Längsrichtung derselben betrachtet einen dem mindestens einen Befestigungsmittel der Einbaudose zugeordneten Abschnitt aufweist, dessen Außendurchmesser gegenüber dem Außendurchmesser der übrigen Verbindungseinrichtung vergrößert ist.

Dieser Abschnitt der Verbindungseinrichtung ist dazu vorgesehen, die Befestigungsmittel der Einbaudose in einem Einbauzustand der Verbindungseinrichtung nach außen zu bewegen. Dadurch, dass lediglich dieser Abschnitt der Verbindungseinrichtung vergrößert ist, ist die Verbindungseinrichtung mit ihrem übrigen Abschnitt in die Einbaudose einführbar. Dabei ist ein Außendurchmesser dieses Abschnitts dem Innendurchmesser der Einbaudose in der Art angepasst, dass die Verbindungseinrichtung einfach einführbar ist, ohne hierbei ein großes Spiel der Verbindungseinrichtung in der Einbaudose zu bewirken. Hierdurch kann sichergestellt werden, dass die Verbindungseinrichtung fest in der Einbaudose verankert ist.

Es ist gemäß einem vorzugsweisen Merkmal der Erfindung vorgesehen, dass die Einbaudose mindestens eine Durchführungsöffnung besitzt, durch die eine Stromleitung und/oder eine Datenleitung eines Versorgungssystems des Gebäudes durchführbar ist.

Die erfindungsgemäße Einbaudose ist mithin analog zu einer bekannten Einbaudose mit den Stromleitungen oder Datenleitungen des Versorgungssystems des Gebäudes verbindbar. Dabei ist ebenso vorgesehen, dass die Leitungen zunächst durch die Durchführungsöffnung der Einbaudose hindurch geführt werden. Dementsprechend muss die Verbindungseinrichtung ebenfalls eine Durchführungsöffnung besitzen, durch die die entsprechenden Leitungen geführt werden können. Die Verbindung der Einbaudose mit dem Versorgungssystem des Gebäudes erfolgt somit im Wesentlichen auf die bekannte Weise, sodass die Installation der erfindungsgemäßen Einbaudose keiner zusätzlichen Kenntnisse bedarf.

Gemäß einer weiterhin vorzugsweisen Ausgestaltung der Erfindung weist die Verbindungseinrichtung auf einer der Einbaudose zugewandten Seite hin mindestens eine Anschlusseinrichtung zur elektrischen und/oder datentechnische Verbindung mit der Stromleitung und/oder Datenleitung auf sowie auf einer der Einbaudose abgewandten Seite, also auf einer dem Rauminneren zugewandten Seite hin, mindestens ein Kopplungselement zur elektrischen Verbindung und/oder zur Übertragung von Daten mit einem elektrischen/elektronischen Gerät und/oder mindestens ein Verbindungselement zur mechanischen Verbindung mit einem elektrischen/elektronischen Gerät. Bei dem elektrischen/elektronischen Gerät kann es sich beispielsweise um die eingangs genannten Installationen wie Steckdosen, Lichtschalter, Rollladenschalter, Bewegungsmelder, Überwachungskameras, Sprechanlagen, Rauchmelder, Einbauleuchten, Telefon-Dosen, WLAN-Repeater, USB-Ports und weitere handeln.

Die Verbindung des elektrischen/elektronischen Geräts mit der Verbindungseinrichtung erfolgt hierbei vorzugsweise sowohl mechanisch, also zur Verankerung des Geräts an der Verbindungseinrichtung, als auch elektrisch und/oder datentechnisch, wobei mittels der elektrischen und/oder datentechnischen Verbindung zum einen eine Versorgung des Geräts mit elektrischer Spannung und/oder eine Übertragung von Daten ermöglicht werden soll. Die Einbaudose dient somit zur Verankerung der Verbindungseinrichtung an dem Bauteil, wohingegen die Verbindungseinrichtung den Kontakt zu dem elektrischen/elektronischen Gerät herstellt. In dem vorgenannten Fall, dass die Verbindungseinrichtung auf einer dem Innenraum zugewandten Rückseite mit einer Anschlusseinrichtung versehen ist, besitzt die Verbindungseinrichtung vorzugsweise keine Durchführungsöffnung für die Versorgungsleitungen des Gebäudes, vielmehr bleiben die Versorgungsleitungen von einer dem Innenraum zugewandten Seite her betrachtet versteckt.

Erfindungsgemäß ist vorgesehen, dass das elektrische/elektronische Gerät mit der Verbindungseinrichtung verbunden, beispielsweise in diese eingesetzt wird. Dabei erfolgt eine Versorgung des elektrischen/elektronischen Geräts mit Strom mittels eines Kopplungselements, das vorteilhafterweise auch dazu vorgesehen sein kann, Daten zu übertragen.

Die mechanische Verbindung des elektrischen/elektronischen Gerätes erfolgt mittels des Verbindungselements, wobei hierzu geeignete Mittel, wie Schraubverbindungen, Steckverbindungen in Frage kommen.

Eine vorteilhafte Ausgestaltung der Erfindung sieht ferner vor, dass das Verbindungselement aus magnetischem Material oder einem Magneten gebildet ist und mit einem im elektrischen/elektronischen Gerät angeordneten Magnet oder magnetischen Material zusammen wirkt. Somit erfolgt die Befestigung des elektrischen/elektronischen Geräts besonders einfach, insbesondere ohne das elektrische/elektronische Gerät mit der Verbindungseinrichtung verschrauben zu müssen. Gleichermaßen ist ein Austausch oder das Entfernen des Geräts besonders schnell und einfach möglich. Ferner ermöglicht die Nutzung eines Magneten und eines magnetischen Materials eine einfache und schnelle Drehbarkeit des elektrischen/elektronischen Geräts, während dieses an der Verbindungseinrichtung verankert ist. Mithin ist eine Änderung der Ausrichtung des elektrischen/elektronischen während eines Betriebs desselben möglich. Vorteilhafter Weise wird ebenso eine Verdrehung eines Kabel des elektrischen/elektronischen Geräts verhindert, welche in aller Regel auf Dauer zu einer Beschädigung des Kabels führen würde.

Dadurch, dass die Verbindungseinrichtung bereits mit den Stromleitungen elektrisch verbunden ist, entfällt mithin ein Anschließen des elektrischen/elektronischen Geräts bei seinem Einbau. Auch der Wechsel eines elektrischen/elektronischen Geräts ist äußerst einfach durchführbar. Das erstmalige Verbinden der Verbindungseinrichtung mit den Stromleitungen 43muss zwar von einem Fachmann, insbesondere einem Elektriker, durchgeführt werden, allerdings kann der nachträgliche Wechsel des Geräts wie vorstehend beschrieben auch von ungeschulten Personen durchgeführt werden.

Schließlich sieht eine Weiterbildung des erfindungsgemäßen Sets ein Montageelement vor, mittels dem die Verbindungseinrichtung in die Einbaudose einführbar und drehbar ist. Hierzu kann die Verbindungseinrichtung beispielsweise eine oder mehrere Nuten in Längsrichtung aufweisen, in die Abschnitte des Montageelements eingreifen, so dass eine Drehung des Montageelements eine Drehung der Verbindungseinrichtung hervorruft. Das Montageelement ist nicht nur geeignet, um den Einbau der Verbindungseinrichtung zu erleichtern sondern ebenfalls ihren Ausbau. Wesentlich für das Montageelement ist, dass es mindestens zwei Abschnitte besitzt, die mit korrespondierenden Abschnitten der Verbindungseinrichtung zusammenwirken können.

### Ausführungsbeispiel:

Die vorstehend beschriebene Erfindung wird nachfolgend anhand eines Ausführungsbeispiels, das in den Figuren dargestellt ist, näher erläutert.

Es zeigt:
- Figur 1:: eine dreidimensionale Ansicht eines erfindungsgemäßen Sets und
- Figur 2:: eine dreidimensionale Ansicht der Einbaudose aus Figur 1.

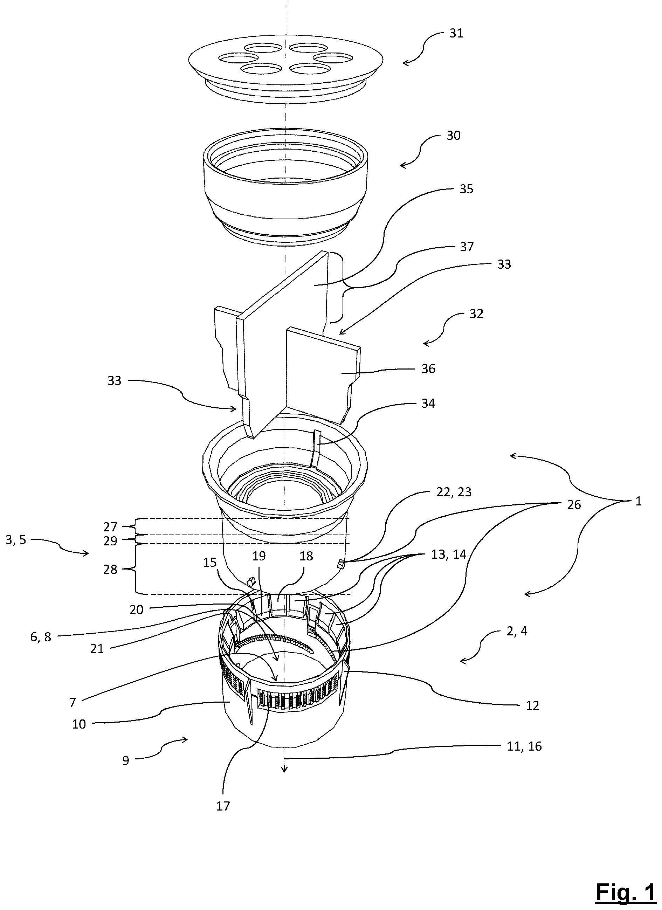

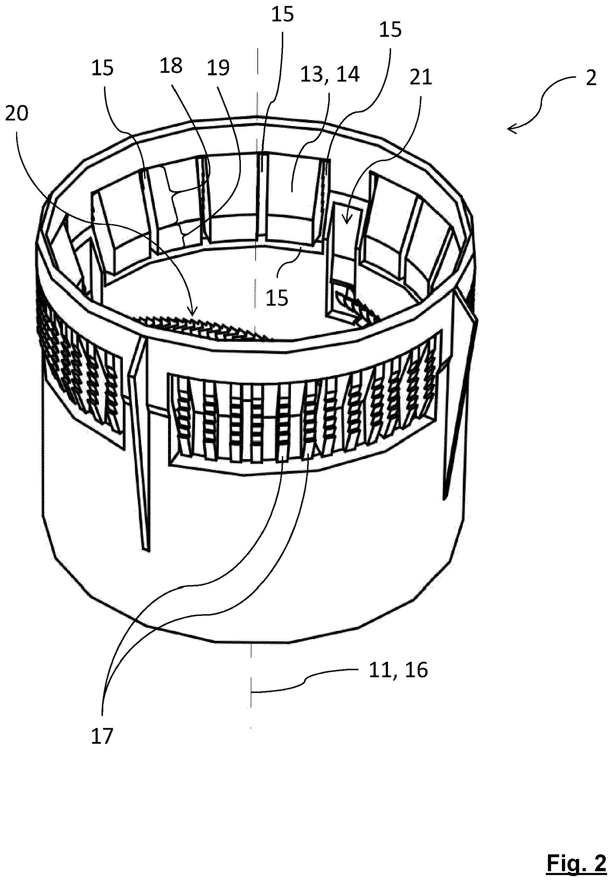

In der Figuren 1 und 2 ist ein erfindungsgemäßes Set 1 zur Befestigung an einem Bauteil eines Gebäudes in verschiedenen dreidimensionalen Ansichten gezeigt, welches eine Einbaudose 2 und eine Verbindungseinrichtung 3 umfasst. Die Figur 2 zeigt lediglich die Einbaudose 2 aus Figur 1. Das Bauteil des Gebäudes ist in den Figuren nicht dargestellt. Sowohl die Einbaudose 2 als auch die Verbindungseinrichtung 3 bestehen aus einem Kunststoff und können beispielsweise Spritzgussteile sein. Die Einbaudose 2 und die Verbindungseinrichtung 3 sind jeweils in ihrem Ruhezustand 4, 5 gezeigt.

Die Einbaudose 2 ist zylinderförmig ausgebildet, wobei die Einbaudose 2 mit einer Aufnahme 6 sowie einer Durchführungsöffnung 7 versehen ist. Die Aufnahme 6 definiert einen Innenraum 8 der Einbaudose 2, wobei ein Durchmesser der Aufnahme 6 einem Innendurchmesser der Einbaudose 2 entspricht. Die Durchführungsöffnung 7 ist an einer Rückseite 9 der Einbaudose angeordnet, wobei die Durchführungsöffnung 7 gemäß dem vorliegenden Ausführungsbeispiel als Kreis mit einem Durchmesser entsprechend dem Innendurchmesser der Einbaudose 2 ausgebildet ist. Alternativ kann die Durchführungsöffnung 7 auch einen anderen Durchmesser besitzen oder eckig ausgebildet sein. Sie dient zur Durchführung von nicht in den Figuren dargestellten Versorgungsleitungen des Gebäudes in den Innenraum 8 der Einbaudose 2. Im vorliegenden Ausführungsbeispiel ist die Einbaudose 2 rohrförmig ausgebildet und besitzt somit eine rohrförmige Wandung 10.

Die Einbaudose 2 besitzt auf ihrer Mantelfläche vier in Längsrichtung 11 der Einbaudose 2 verlaufende keilförmige Rippen 12, die äquidistant über den Umfang der Einbaudose 2 verteilt sind. Die Rippen 12 dienen einer gewissen Lagefixierung der Einbaudose 2 innerhalb einer Öffnung des Bauteils, was ein späteres Einsetzen der Verbindungseinrichtung 3 erleichtern kann. Alternativ kann die Einbaudose jedoch auch ohne die Rippen ausgeführt sein.

Ferner besitzt die Einbaudose 2 sechzehn über den Umfang verteilte Befestigungsmittel 13 in Form von Federelementen 14, wobei jeweils vier Federelemente 14 direkt nebeneinander angeordnet sind und zwischen solchen Federelementgruppen ein Abstand besteht. Selbstverständlich können die Verteilung und die Anzahl der Befestigungsmittel 13 auch anders erfolgen.

Die Federelemente 14 sind dadurch gebildet, dass in der rohrförmigen Wandung 10 der Einbaudose 2 entsprechende Schlitze 15 in horizontale und vertikale Richtung verlaufen, so dass ein Federelement 14, das insgesamt rechteckförmig ausgebildet ist, an drei Seiten frei liegt und lediglich entlang einer kurzen Seite mit der Wandung 10 der Einbaudose 2 verbunden beziehungsweise integral ausgebildet ist. Die Befestigungsmittel 13 sind radial - bezogen auf die Längsrichtung 11 der Einbaudose 2 beziehungsweise deren Längsachse 16 - nach außen verformbar.

Die Befestigungsmittel 13 sind auf einer dem Innenraum 8 der Einbaudose 2 abgewandten Seite mit in Längsrichtung 11 verlaufenden Rippen 17 versehen, die den Halt des Sets 1 in einem Einbauzustand desselben an dem Bauteil, der nicht in der Figur dargestellt ist, begünstigen. Alternativ können die Rippen 17 auch in Umfangsrichtung angeordnet sein. Auch kann auf die Ausbildung der Rippen 17 verzichtet werden.

Die Befestigungsmittel 13 sind in Längsrichtung 11 der Einbaudose 2 betrachtet in zwei Abschnitte 18, 19 unterteilt, wobei die Befestigungsmittel 13 in einem ersten Abschnitt 18 keilförmig ausgebildet sind und in einem zweiten Abschnitt 19 eine konstante Dicke besitzen. In dem ersten Abschnitt 18 wächst eine in radiale Richtung gemessene Dicke der Befestigungsmittel 13 in Richtung der Rückwand der Einbaudose 2 kontinuierlich an. Dabei sind die Befestigungsmittel 13 so ausgebildet, dass ein Außendurchmesser der Einbaudose 2 gleichbleibt und ein Innendurchmesser der Einbaudose 2 aufgrund der wachsenden Dicke der Federelemente 14 in ihrem ersten Abschnitt 18 eingeschnürt wird. Anders ausgedrückt ragen die Federelemente 14 teilweise in den Innenraum 8 der Einbaudose 2 hinein.

Zwecks Einführung und Verbindung der Verbindungseinrichtung 3 in die bzw. mit der Einbaudose 2 weist die rohrförmige Wandung 10 der Einbaudose 2 auf einer dem Innenraum 8 zugewandten Seite hin vier Nuten 20 auf, die in Längsrichtung 11 der Einbaudose 2 betrachtet spiralförmig verlaufen. Jede der Nuten 20 weist ferner einen Einführabschnitt 21 auf, der sich ausgehend von dem spiralförmig verlaufenden Teil in Richtung der Längsachse 16 der Einbaudose 2 erstreckt.

Dementsprechend weist die ebenfalls zylinderförmig ausgebildete Verbindungseinrichtung 3 an ihrer äußeren Mantelfläche radial nach außen vorstehende Führungselemente 22 in Form von Nasen 23 auf, die bei dem Einsetzen der Verbindungseinrichtung 3 in die Einbaudose 2 zunächst in die Einführabschnitte 21 und dann in die Nuten 20 gelangen. Durch den leicht spiralförmigen Verlauf der Nuten 20 erfolgt bei einer Bewegung der Führungselemente 22 innerhalb der Nuten 20 gleichzeitig eine Drehbewegung und eine Abwärtsbewegung der Verbindungseinrichtung 3 in Richtung Rückseite 9 der Einbaudose 2.

Die Nuten 20 der Einbaudose 2 weisen jeweils Nutflanken 24 auf, die jeweils im Verlauf der Nut 20 treppenartig oder zahnartig verlaufen. Ferner weisen die Führungselemente 22 an der Verbindungseinrichtung 3 jeweils einen Vorsprung 25 auf, der bei der Drehbewegung der Verbindungseinrichtung 3 in der Einbaudose 2 an den jeweiligen Treppenstufen der Nutflanken 24 einrastet, so dass einem unbeabsichtigen Herausdrehen der Verbindungseinrichtung 3 entgegengewirkt wird. Für ein absichtliches Herausdrehen der Verbindungseinrichtung 3 ist zur Überwindung der vorbeschriebenen Einrastung ein größerer Kraftaufwand erforderlich.

Die Verbindungseinrichtung 3 besitzt vier Führungselemente 22, von denen nur zwei in den Figuren zu erkennen sind, und die Einbaudose 2 entsprechend vier Nuten 20, wobei Führungselemente 22 und Nuten 20 jeweils äquidistant über den Umfang der Verbindungseinrichtung 3 und Einbaudose 2 verteilt sind. Die Führungselemente 22 und die Nuten 20 bilden zusammen vier Verbindungsmittel 26, mittels denen die Verbindungseinrichtung 3 in der Einbaudose 2 befestigbar ist. Somit liegt im vorliegenden Ausführungsbeispiel eine Verbindung nach Art eines Bajonettverschlusses vor.

Die Verbindungseinrichtung 3 lässt sich in Längsrichtung 11 derselben drei Abschnitte 27, 28, 29 unterteilen, wobei ein erster, der Einbaudose abgewandter Abschnitt 27 einen gegenüber einem Außendurchmesser des zweiten, der Einbaudose zugewandten Abschnitts 28 der Verbindungseinrichtung vergrößerten Außendurchmesser aufweist. Im Bereich eines die beiden Abschnitte verbindenden Übergangsabschnitts 29 vergrößert sich ein Außendurchmesser der Verbindungsrichtung 3 ausgehend von dem Außendurchmesser des zweiten Abschnitts 28 gleichmäßig, bis er dem Außendurchmesser des ersten Abschnitts 27 entspricht.

Es ist vorgesehen, das Set 1 bestehend aus der Einbaudose 2 und der Verbindungseinrichtung 3 an dem Bauteil des Gebäudes zu befestigen, um ein elektrisches/elektronisches Gerät an dem Bauteil zu installieren. Die Befestigung des Sets 1 erfolgt hierbei bei einer Überführung der Verbindungseinrichtung 3 in einen Einbauzustand, der in den Figuren nicht dargestellt ist.

Die Einbaudose 2 wird vorzugsweise in eine Kernlochbohrung eingesetzt. Anschließend wird die Verbindungseinrichtung 3 in die Einbaudose 2 eingeführt. Hierzu muss die Verbindungseinrichtung 3 derart ausgerichtet sein, dass die Nasen 23 mit den Einführabschnitten 21 der Nuten 20 der Einbaudose 2 korrespondieren. Mittels einer Bewegung in Richtung der Längsachse 16 der Einbaudose 2 wird die Verbindungseinrichtung 3 in die Einbaudose 2 eingesetzt. Die Verbindung der Verbindungseinrichtung 3 erfolgt sodann mittels einer Drehung der selbigen, sodass die Führungselemente 22 in ihrer jeweiligen Nut 20 bewegt werden. Dabei stellen die optional vorhandenen Rippen 12 sicher, dass lediglich eine Verdrehung der Verbindungseinrichtung 3 in der Einbaudose 2 und nicht der Einbaudose 2 in der Kernlochbohrung erfolgt.

Infolge der Drehbewegung wird die Verbindungseinrichtung 3 gleichzeitig in Richtung der Längsachse 16 der Einbaudose 2 bewegt, wobei ein Abstand zwischen der Einbaudose 2 und der Verbindungseinrichtung 3 verringert wird. Die Verbindungseinrichtung 3 wird somit in ihren Einbauzustand überführt. Im Einbauzustand steht der erste Abschnitt 27 der Verbindungseinrichtung 3 mit einer der Aufnahme 6 der Einbaudose 2 zugewandten Fläche des Federelementes 14 in Kontakt. Dadurch, dass der Außendurchmesser der Verbindungseinrichtung 3 in einem im Einbauzustand der Verbindungseinrichtung 3 den Befestigungsmitteln 13 korrespondierenden Bereich größer ist als der Innendurchmesser der Einbaudose 2 im Bereich der Befestigungsmittel 13, werden die Befestigungsmittel 13 ausgehend von der Längsachse 16 der Einbaudose 2 in radiale Richtung nach außen bewegt. Hierdurch wird die äußere Mantelfläche der Einbaudose 2 derart verformt, dass die Federelemente 14 über die ursprüngliche Mantelfläche der Einbaudose 2 hervorstehen. Die Einbaudose 2 wird somit in der Kernlochbohrung verankert.

Die Verbindungseinrichtung 3 weist auf einer der Einbaudose 2 zugewandten Seite hin eine nicht in den Figuren erkennbare Anschlusseinrichtung zur elektrischen Verbindung mit einer Strom- und/oder Datenleitung des Gebäudes auf. Es ist vorgesehen, die Strom- und/oder Datenleitung ausgehend von dem Versorgungssystems des Gebäudes durch die Durchführungsöffnung 7 hindurch zu führen und mit der Anschlusseinrichtung der Verbindungseinrichtung 3 elektrisch und/oder datentechnisch zu verbinden.

Ferner weist die Verbindungseinrichtung 3 ein nicht in den Figuren dargestelltes Kopplungselement zur elektrischen Verbindung mit einem elektrischen/elektronischen Gerät 30 auf, wobei das Kopplungselement nach Art der elektrischen Verbindung eines Wasserkochers ausgebildet ist.

Darüber hinaus umfasst die Verbindungseinrichtung 3 ein abermals nicht in den Figuren dargestelltes Verbindungselement zur mechanischen Verbindung mit dem elektrischen/elektronischen Gerät 30. Das Verbindungselement ist in Form eines magnetischen Materials ausgebildet.

Das elektrische/elektronische Gerät 30 weist ein in einer nicht in den Figuren dargestellten Halterung angeordnetes Leuchtmittel 31 auf, wobei die Halterung zumindest teilweise aus einem Metall gebildet ist, sodass das Gerät bei Kontakt mit dem magnetischen Material mittels Magnetkraft an der Verbindungseinrichtung 3 halterbar ist.

In der Figur 1 ist schließlich noch ein Montageelement 32 zu erkennen, mittels dem die Verbindungseinrichtung 3 auf besonders einfache Weise in die Einbaudose 2 einführbar und drehbar ist. Hierzu weist das Montageelement 32 zwei Führungsabschnitte 33 in Form von Wandabschnitten auf, die in zwei entsprechende Führungsnuten 34 auf einer inneren Mantelfläche der Verbindungseinrichtung 3 einführbar sind, so dass eine auf das Montageelement 32 ausgeübte Drehbewegung auf die Verbindungseinrichtung 3 übertagen wird. Das Montageelement 32 besitzt zwei sich in einem rechten Winkel kreuzende und in Längsrichtung 11 der Einbaudose 2 verlaufende Wandungen 35, 36, wobei die zwei Führungsabschnitte 33 von Teilen der ersten Wandung 35 gebildet werden. Ferner ist die erste Wandung 35 ist länger ausgebildet als die zweite Wandung 36, so dass die erste Wandung 35 in einem oberen Abschnitt einen Greifabschnitt 37 zum händischen Bedienen des Montageelements 32 bildet.

Aus der Figur 1 ist gut zu erkennen, dass sämtliche gezeigten Elemente koaxial zueinander miteinander in Eingriff gebracht werden.

### Bezugszeichenliste:

- 1: Set
- 2: Einbaudose
- 3: Verbindungseinrichtung
- 4: Ruhezustand Einbaudose
- 5: Ruhezustand Verbindungseinrichtung
- 6: Aufnahme
- 7: Durchführungsöffnung
- 8: Innenraum
- 9: Rückseite
- 10: Wandung
- 11: Längsrichtung
- 12: Rippe
- 13: Befestigungsmittel
- 14: Federelement
- 15: Schlitz
- 16: Längsachse Einbaudose
- 17: Rippe
- 18: Erster Abschnitt
- 19: Zweiter Abschnitt
- 20: Nut
- 21: Einführungsabschnitt
- 22: Führungselemente
- 23: Nase
- 24: Nutflanke
- 25: Vorsprung
- 26: Verbindungsmittel
- 27: Erster Abschnitt
- 28: Zweiter Abschnitt
- 29: Übergangsabschnitt
- 30: Gerät
- 31: Leuchtmittel
- 32: Montageelement
- 33: Führungsabschnitte
- 34: Führungsnut
- 35: Erste Wandung
- 36: Zweite Wandung
- 37: Greifabschnitt

## Patentansprüche

1. Set (1) zur Befestigung an einem Bauteil eines Gebäudes, umfassend
- eine zylinderförmige Einbaudose (2) mit mindestens einem Befestigungsmittel (13) zur mechanischen Verbindung der Einbaudose (2) mit dem Bauteil und
- eine zylinderförmige Verbindungseinrichtung (3),
wobei die Einbaudose (2) eine Aufnahme (6) zur Aufnahme der Verbindungseinrichtung (3) aufweist und die Verbindungseinrichtung (3) ausgehend von einem Ruhezustand (5) in die Aufnahme (6) einführbar und mittels mindestens eines Verbindungsmittels (26) befestigbar ist, so dass ein Einbauzustand der Verbindungseinrichtung (3) vorliegt, **dadurch gekennzeichnet, dass** ein Außendurchmesser der Verbindungseinrichtung (3) mindestens in einem Bereich, der im Einbauzustand der Verbindungseinrichtung (3) mit dem Bereich des mindestens einen Befestigungsmittels (13) der Einbaudose (2) zumindest teilweise korrespondiert, größer ist als ein Innendurchmesser der Einbaudose (2) im Bereich des mindestens einen Befestigungsmittels (13) im Ruhezustand (4) der Einbaudose (2).

2. Set nach Anspruch 1, **dadurch gekennzeichnet, dass** das mindestens eine Befestigungsmittel (13) von einem Federelement (14) gebildet ist, das im Ruhezustand (4) der Einbaudose (2) über einen Innendurchmesser der Einbaudose (2) in einen von der Aufnahme (6) gebildeten Innenraum (8) der Einbaudose (2) hineinragt, wobei der dem Bereich des Federelementes (14) zumindest teilweise korrespondierende Bereich der Verbindungseinrichtung (3) in ihrem Einbauzustand mit einer dem Innenraum (8) der Einbaudose (2) zugewandten Fläche des mindestens einen Federelementes (14) in Kontakt steht.

3. Set nach Anspruch 1 oder 2, **dadurch gekennzeichnet, dass** sich das mindestens eine Verbindungsmittel (26) zur Verbindung der Verbindungseinrichtung (3) mit der Einbaudose (2) aus einer in der Einbaudose (2) angeordneten, dem Innenraum (8) der Aufnahme (6) zugewandten Nut (20) und mindestens einem an einer äußeren Mantelfläche der Verbindungseinrichtung (3) angeordneten Führungselement (22) zusammensetzt, wobei das mindestens eine Führungselement (22) in die Nut (20) einführbar ist.

4. Set nach einem der Ansprüche 1 bis 3, **dadurch gekennzeichnet, dass** die Nut (20) in Richtung einer Längsachse (16) der Einbaudose (2) betrachtet spiralförmig verläuft.

5. Set nach einem der Ansprüche 1 bis 4, **gekennzeichnet durch** eine Mehrzahl an der äußeren Mantelfläche der Verbindungseinrichtung (3) verteilt angeordneter Führungselemente (22) die jeweils in entsprechende Nutabschnitte einführbar sind.

6. Set nach einem der Ansprüche 1 bis 5, **dadurch gekennzeichnet, dass** die Verbindungseinrichtung (3) in Längsrichtung (11) derselben betrachtet einen dem mindestens einen Befestigungsmittel (13) der Einbaudose (2) zugeordneten Abschnitt (27) aufweist, dessen Außendurchmesser gegenüber dem Außendurchmesser der übrigen Verbindungseinrichtung (3) vergrößert ist.

7. Set nach einem der Ansprüche 1 bis 6, **dadurch gekennzeichnet, dass** die Einbaudose (2) mindestens eine Durchführungsöffnung (7) besitzt, durch die eine Stromleitung und/oder Datenleitung eines Versorgungssystems des Gebäudes durchführbar ist.

8. Set nach einem der Ansprüche 1 bis 7, **dadurch gekennzeichnet, dass** die Verbindungseinrichtung (3) auf einer der Einbaudose (2) zugewandten Seite hin mindestens eine Anschlusseinrichtung zur elektrischen und/oder datentechnische Verbindung mit der Stromleitung und/oder Datenleitung des Gebäudes aufweist sowie auf einer der Einbaudose (2) abgewandten Seite mindestens ein Kopplungselement zur elektrischen Verbindung und/oder zur Übertragung von Daten mit einem elektrischen/elektronischen Gerät (30) und mindestens ein Verbindungselement zur mechanischen Verbindung mit einem elektrischen/elektronischen Gerät (30).

9. Set nach einem der Ansprüche 1 bis 8, **dadurch gekennzeichnet, dass** das Kopplungselement aus magnetischem Material oder einem Magneten gebildet ist und mit einem im elektrischen/elektronischen Gerät (30) angeordneten Magnet oder magnetischen Material zusammen wirkt.

10. Set nach einem der Ansprüche 1 bis 9, **gekennzeichnet durch** ein Montageelement (32), mittels dem die Verbindungseinrichtung (3) in die Einbaudose (2) einführbar und drehbar ist.
